# EUROPEAN PATENT SPECIFICATION

(11) **EP 3 452 338 B1**
(45) Date of publication and mention of the grant of the patent: **03.07.2024**
(21) Application number: 17793342.1
(22) Date of filing: 04.05.2017
(51) Int. Cl.: B60R 21/01, B60R 21/013, B60R 21/0132, B60R 21/0134, H04W 4/02, H04W 4/40, G01S 5/00, H04W 4/021, H04W 4/46

(54) **METHODS FOR SMARTPHONE COMMUNICATION BETWEEN VEHICLE AND PEDESTRIAN**
VERFAHREN FÜR SMARTPHONE-KOMMUNIKATION ZWISCHEN FAHRZEUG UND FUSSGÄNGER
PROCÉDÉS POUR UNE COMMUNICATION DE TÉLÉPHONE INTELLIGENT ENTRE UN VÉHICULE ET UN PIÉTON

(30) Priority: 06.05.2016 US 201662333058 P
(43) Date of publication of application: 13.03.2019
(73) Proprietor: Sfara Inc., Hoboken, NJ 07030 (US)
(72) Inventor: Miluzzo, Emiliano, Madison, NJ 07940 (US); Simon, Sascha, Warwick, NY 10990 (US)
(74) Representative: Otten, Roth, Dobler & Partner mbB Patentanwälte
(86) International application number: PCT/US2017/031062
(87) International publication number: WO 2017/192852

(56) References cited:
- WO-A1-2008/093934
- WO-A2-2014/151095
- US-A1- 2007 255 498
- US-A1- 2011 246 156
- US-A1- 2013 096 731
- US-A1- 2013 279 392
- US-A1- 2014 180 563
- US-A1- 2015 142 208
- US-A1- 2015 183 431
- US-A1- 2015 251 599
- US-A1- 2015 291 159
- US-A1- 2016 075 332
- US-B1- 6 223 125
- US-B2- 6 859 731
- US-B2- 8 547 249
- US-B2- 8 547 249
- US-B2- 8 762 043
- US-B2- 9 315 150
- REZAEI ET AL.: 'Tracking the position of neighboring vehicles using wireless communications' TRANSPORTATION RESEARCH PART C: EMERGING TECHNOLOGIES, [Online] vol. 18, no. 3, 2010, pages 335 - 350, XP027030071 Retrieved from the Internet: <URL:https://www.researchgate.net/profile/S hahram_Rezaei/publication/229349165_Trackin g_the_p osition_of_neighboring_vehicles_using_wirel ess_communications/links/54e27b950cf2966637 9 69dd8.pdf> [retrieved on 2017-06-19]

## Description

### BACKGROUND

There currently is no system for smartphones to autonomously communicate with one another, It would be beneficial if a smartphone could determine aspects of the vehicle within which it is disposed and communicate these aspects to smart phones in nearby vehicles or on nearby pedestrians to reduce the likelihood of collisions or other titistife conditions. Such a technology is today not commercially available.

### SUMMARY

The present invention provides an improved method and apparatus for determining aspects of a vehicle within which a smartphone is disposed and for communicating these aspects to nearby smartphones reduce the likelihood of vehicular collisions.

Various embodiments described herein are drawn to a device for use with a vehicle and with a communication device. The communication device can transmit a first vehicle mode signal and a subsequent signal. The device includes a processing component, an indicator component, a transmitting component and a receiving component. The processing component can operate in a vehicle mode and can operate in a second mode. The indicator component can provide a vehicle mode indication signal when the processing component is operating in the vehicle mode. The transmitting component can transmit a second vehicle mode signal based on the vehicle mode indication signal. The receiving component can receive the first vehicle mode signal and can receive the subsequent signal. The processing component can further perform a function while in the vehicle mode based on the first vehicle mode signal and the subsequent signal.

Prior art as disclosed in WO 2014/151095 A2 or US 2013/279392 A1 provide methods for detection of a likelihood of collision. The disclosed methods usually have the problem of a high amout of false positive output or low accuracy due to a low number of aspects taken into account for execution purposes.

### BRIEF SUMMARY OF THE DRAWINGS

The accompanying drawings, which are incorporated in and form a part of the specification, illustrate an exemplary embodiment of the present invention and, together with the description, serve to explain the principles of the invention. In the drawings:
FIGs. 1A-C illustrate two vehicles travelling at times *t₀*, *t₁* and *t₂*, respectively, and ultimately crashing;
**FIG. 2** illustrates a communication system;
FIGs. 3A-C illustrate two vehicles travelling at times *t₃*, *t₄* and *t₅*, respectively, and avoiding a crash in accordance with aspects of the present invention;
**FIG. 4** illustrates an example communication device in accordance with aspects of the present invention;
FIG. 5 illustrates an example parameter-detecting component in accordance with aspects of the present invention;
**FIG. 6** illustrates an example method of communicating between two communication devices in accordance with aspects of the present invention;
**FIG. 7A** illustrates a person walking alongside a road at a time *t₁*;
**FIG. 7B** illustrates the person **of** **FIG. 7A** walking into the road at a time *t₂*;
**FIG. 8** illustrates a communication system in accordance with aspects of the present invention;
**FIG. 9** illustrates an example method of avoiding a collision between people by communicating between two communication devices in accordance with aspects of the present invention;
**FIG. 10** illustrates an exploded view of an example embodiment of the controlling component of **FIG. 4** in accordance with aspects of the present invention;
**FIG. 11A** illustrates an intersection at time *t₀* implementing an example communication system in accordance with aspects of the present invention;
**FIG. 11B** illustrates the intersection of FIG. 11A at time *t₁*;
**FIG. 12** illustrates an intersection, implementing another example communication system in accordance with aspects of the present invention.

### DETAILED DESCRIPTION

The invention is defined by a first method according to independent claim 1 and by a second method according to independent claim 2. Both methods are for communicating between two smartphones. Preferred embodiments are specified by the dependent claims.

As used herein, the term "smartphone" includes cellular and/or satellite radiolelephone(s) with or without a display (text/graphical); Personal Communications System (PCS) terminal(s) that may combine a radiotelephone with data processing, facsimile and/or data, communications capabilities; Personal Digital Assistant(s) (PDA) or other devices that can include a radio frequency transceiver and a pager, Internet/Intranet access, Web browser, organizer, calendar and/or a global positioning system (GPS) receiver; and/or conventional laptop (notebook) and/or palmtop (netbook) computer(s), tablet(s), or other appliance(s), which include a radio frequency transceiver. As used herein, the term "smartphone " also includes any other radiating user device that may have time-varying or fixed geographic coordinates and/or may be portable, transportable, installed in a vehicle (aeronautical, maritime, or land-based) and/or situated and/or configured to operate locally and/or in a distributed fashion over one or more locationt(s).

In an example embodiment, a first smartphone is disposed in a first vehicle and a second smartphone is disposed in a second vehicle. The first smartphone and second smartphone are able to inform one another that they are each in a vehicle. The first smartphone is additionally able to inform the second smartphone of the speed and direction of the vehicle in which the first smartphone is disposed. In the event that the speed and direction of the vehicle in which the first smartphone is disposed may signify a probable collision with the vehicle in which the second smartphone is disposed, the second smartphone may provide a warning to the driver of the second vehicle.

Aspects of the present invention include a smartphone being able to identify whether it is in a vehicle based on a detection of a magnetic field and additional parameters associated with the vehicle.

Aspects of the present invention include a smartphone being able to associate a particular function to be performed when it receives information from another smartphone. In some specific embodiments, the particular function is based on whether the smartphone is disposed within a vehicle. As such, the number of possible functions to be performed is limited to those associated with being in a vehicle. Alternatively, if the smartphone is not disposed in a vehicle, than the number of possible functions to be performed is limited to those possible functions that are not associated with the smartphone being in a vehicle.

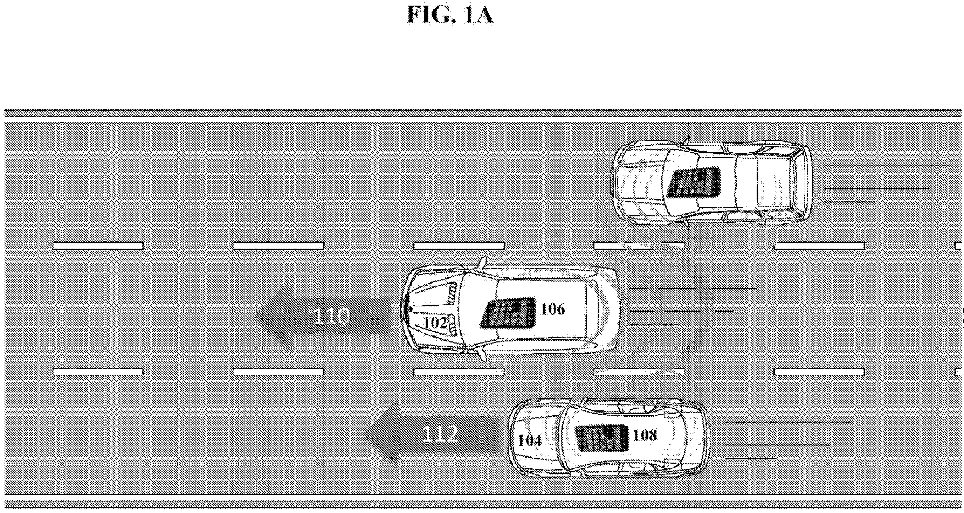

FIGs. 1A-C illustrate two vehicles travelling at times *t₀*, *t₁* and *t₂*, respectively, and ultimately crashing.

**FIG. 1A** includes a vehicle **102** and a vehicle **104** at a time *t₀*. Vehicle **102** has a communication device **106** therein, and is traveling in a direction indicated by arrow **110**. Vehicle **104** has a communication device **108** therein, and is traveling in a direction indicated by arrow **112**. For purposes of discussion throughout, a smartphone is an example of a communication device.

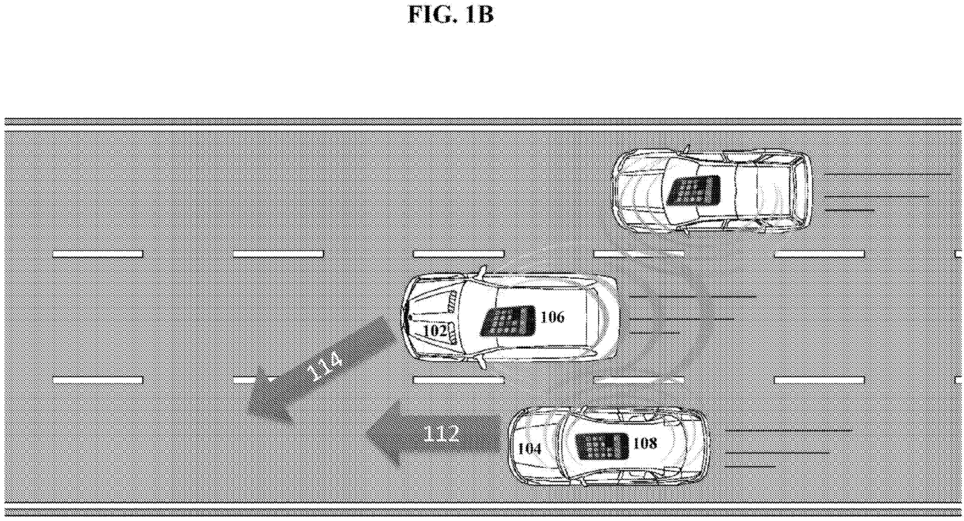

At time *t₁*, the driver of vehicle **102** changes direction without seeing vehicle **104.** This is shown in **FIG. 1B****.** In particular, at time *t₁*, vehicle **102** is traveling in the direction indicated by arrow **114.**

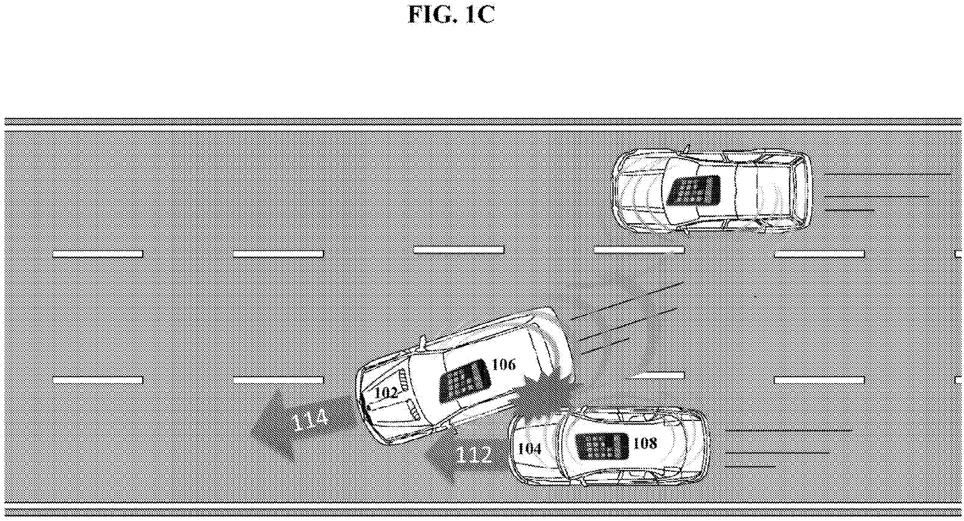

At time *t₂*, the driver of vehicle **102** continues to travel in the direction indicated by arrow **114** without seeing vehicle **104.** This is shown in **FIG. 1C**, wherein vehicle **102** crashes with vehicle **104.**

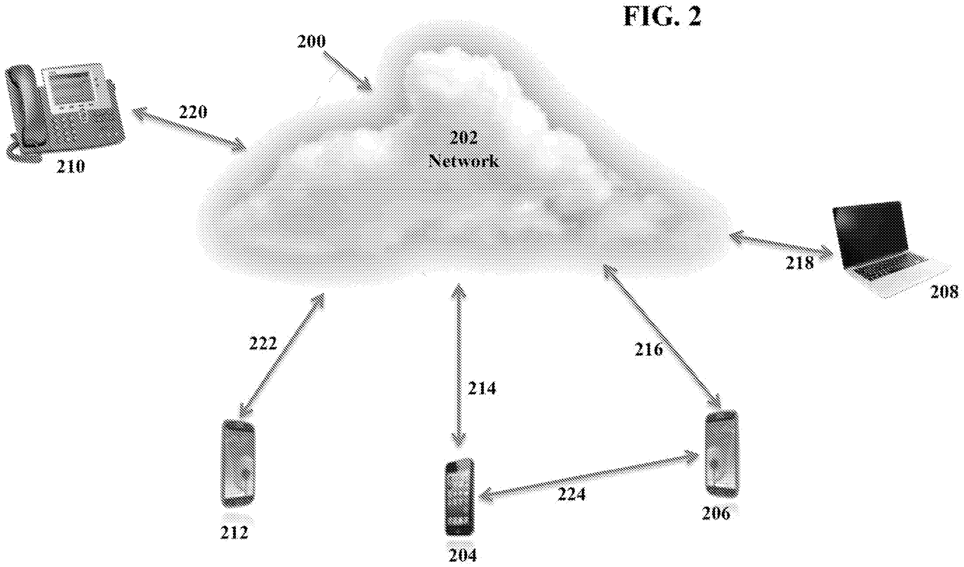

In accordance with aspects of the present invention, the situation discussed above with reference to FIGs. 1A-C may be avoided through use of nonverbal communications between two or more smartphones. This and other aspects of the present invention will be further described with reference to **FIGs. 2-6****.**

**FIG. 2** illustrates a communication system **200.**

As shown in the figure, communication system **200** includes a network **202,** a communication device **204** in accordance with aspects of the present invention, a communication device **206** in accordance with aspects of the present invention, a plurality of computers - a sample of which is indicated as computer **208,** a plurality of land-line telephones - a sample of which is indicated as land-line telephone **210** and a plurality of communication devices - a sample of which is indicated as communication device **212.**

Network **202** may include wide area networks (WANs), local area networks (LANs), satellite communication networks, public switched telephone networks, cellular communication networks, the Internet and combinations thereof. Communication device **206** is able to send/receive information to/from network **202** via a communication channel **214.** Communication device **206** is able to send/receive information to/from network **202** via a communication channel **216.** Computer **208** is able to send/receive information to/from network **202** via a communication channel **218.** Land-line telephone **210** is able to send/receive information to/from network **202** via a communication channel 220. Communication device **212** is able to send/receive information to/from network **202** via a communication channel **222.** In accordance with aspects of the present invention, communication device **204** is additionally operable to send/receive information to/from communication device **206** via a communication channel **224.**

Each and every one of communication device **204**, communication device **206,** computer **208**, land-line telephone **210** and communication device **212** is able to communicate with one another by way of network **202.**

Communication channels **214, 216, 218, 220** and **222** may be any known wired or wireless communication channels. Communication channel **224** may be any known wireless communication channel.

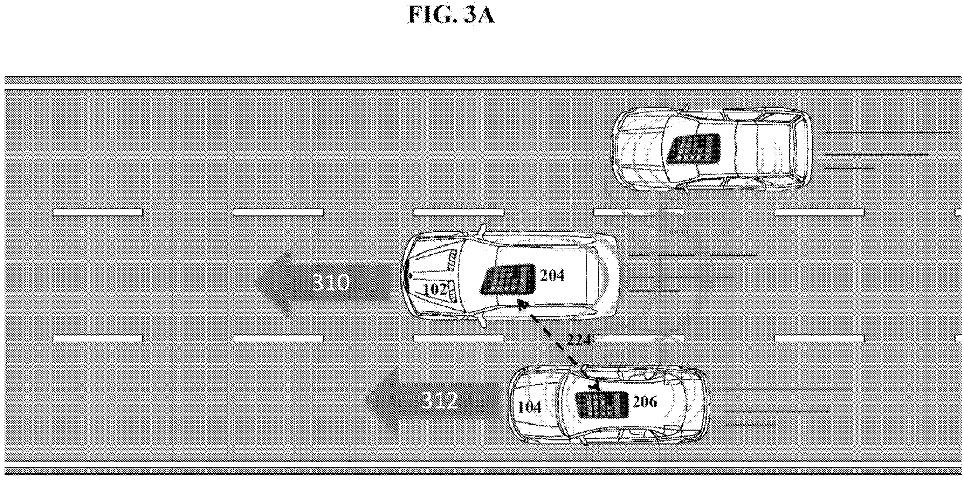

An example implementation of an aspect in accordance with the present invention, by way of communication device **204** and communication device **206**, may autonomously facilitate crash avoidance. This will now be further described with reference to FIGs. 3A-C.

FIGs. 3A-C illustrate two vehicles travelling at times *t₃*, *t₄* and *t₅*, respectively, and ultimately avoiding a crash in accordance with aspects of the present invention.

**FIG. 3A** includes vehicle **102** and vehicle **104** at a time *t₃*. Vehicle **102** has communication device **204** therein, and is traveling in a direction indicated by arrow **310**. Vehicle **104** has a communication device **206** therein, and is traveling in a direction indicated by arrow **312.** Here, communication device **204** is in communication with communication device **206** via communication channel **224.** In example embodiments, communication device **204** and communication device **206** are exchanging information related to each other's respective location and velocity.

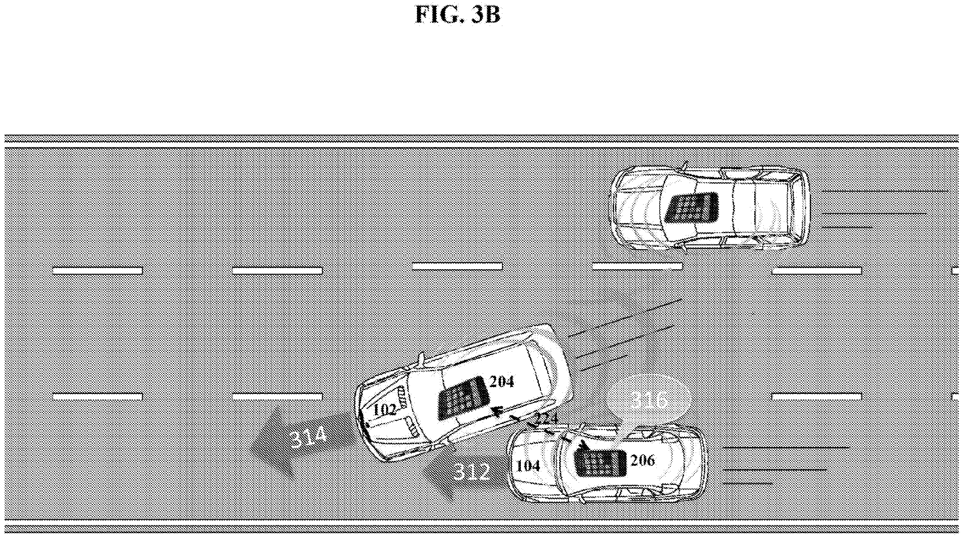

At time *t₄,* the driver of vehicle **102** changes direction without seeing vehicle **104.** This is shown in **FIG. 3B**. In particular, at time *t₄*, vehicle **102** is traveling in the direction indicated by arrow **314.** Here, again, communication device **204** is in communication with communication device **206** via communication channel **224.** Again in this example, communication device **204** and communication device **206** are exchanging information related to each other's respective location and velocity, Further, communication device **206** provides an alert, as shown in the figure as item **316,** to alert driver of vehicle **104** that if vehicle **102** proceeds along direction **314** is likely to collide with vehicle **104.**

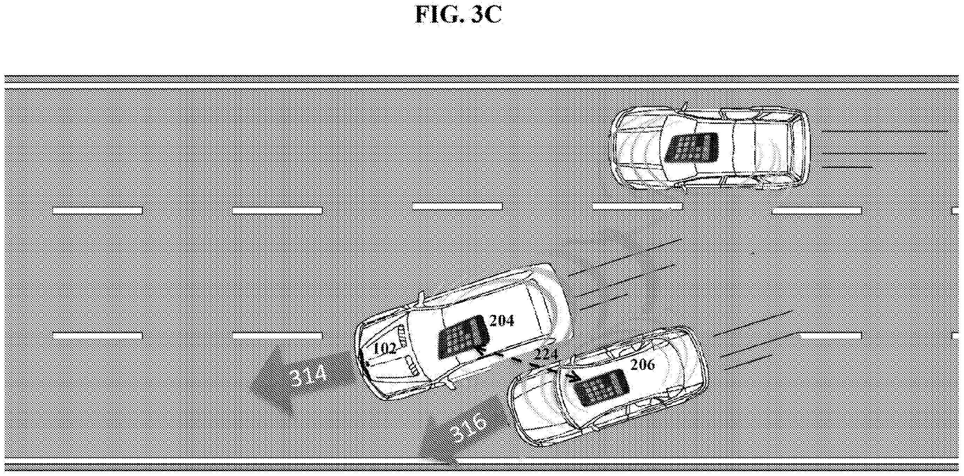

As shown in **FIG. 3C**, at time *t₅*, the driver of vehicle **104** changes direction as indicated by arrow **316** irrespective of whether the driver of vehicle **102** has seen vehicle **104**. As such, the driver of vehicle **104** avoids crashing into vehicle **102.**

In the example embodiments discussed above with reference to FIGs. 3A-C, communication device **204** is operable to wirelessly communicate with communication device **206.** However, this is a non-hmiting example for purposes of discussion. It should be noted that a plurality of communication devices may be able to communicate with one another. Further, in the example discussed above with reference to FIGs. 3A-C, communication device **206** is operable to provide a warning to the driver of vehicle **104.** However, in accordance with aspects of the present invention, communication device **204** may similarly provide a warning to the driver of vehicle **102** based on information provided by communication device **206,** which was explicitly not discussed for purposes of brevity.

The implementation of an aspect of the present invention discussed above with reference to FIGs. 3A-C is a non-limiting example implementation. In general, an aspect of the present invention enables communication devices to wirelessly communicate with one another wherein at least one of the communication devices then autonomously provides a function based on the wireless communication with the other communication device.

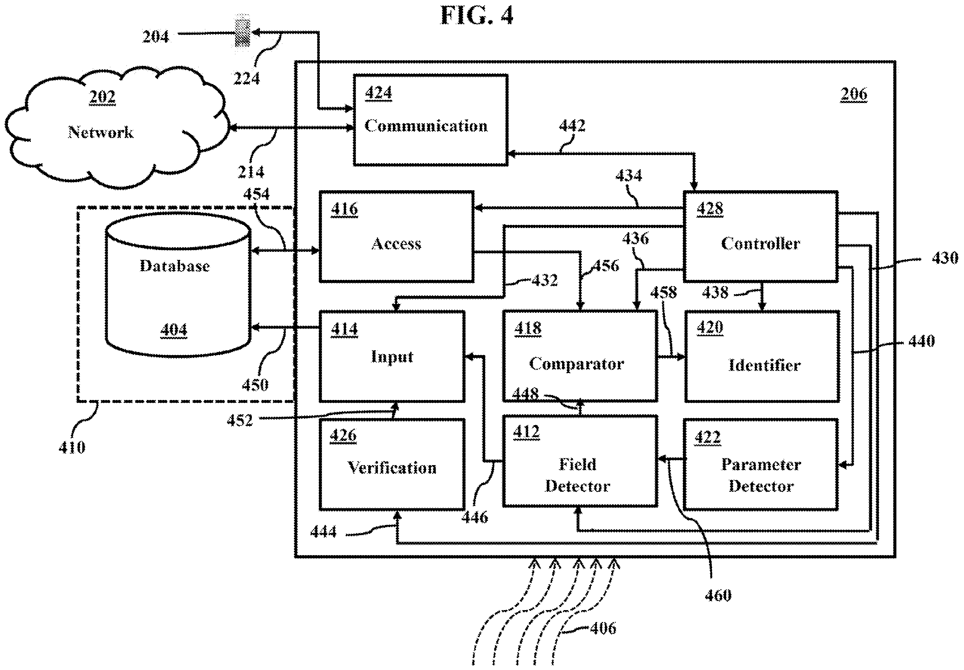

A more detailed discussion of an example communication device and method in accordance with aspects of the present invention will now be described with reference to **FIGs. 4-6****.**

**FIG. 4** illustrates an example communication device **206** in accordance with aspects of the present invention,

**FIG. 4** includes a device **204**, a device **206,** a database **404**, a field **406** and a network **408**. In this example embodiment, device **206** and database **404** are distinct elements. However, in some embodiments, device **206** and database **404** may be a unitary device as indicated by dotted line **410.**

Device **206** includes a field-detecting component **412,** an input component **414,** an accessing component **416,** a comparing component **418,** an identifying component **420,** a parameter-detecting component **422,** a communication component **424,** a verification component **426** and a controlling component **428.**

In this example, field-detecting component **412,** input component **414,** accessing component **416,** comparing component **418,** identifying component **420,** parameter-detecting component **422,** communication component **424,** verification component **426** and controlling component **428** are illustrated as individual devices. However, in some embodiments, at least two of field-detecting component **412,** input component **414,** accessing component **416**, comparing component **418**, identifying component **420,** parameter-detecting component 422, communication component **424,** verification component **426** and controlling component **428** may be combined as a unitary device. Further, in some embodiments, at least one of field-detecting component **412,** input component **414,** accessing component **416,** comparing component **418,** identifying component **420**, parameter-detecting component **422,** communication component **424,** verification component **426** and controlling component **428** may be implemented as a computer having tangible computer-readable media for carrying or having computer-executable instructions of data structures stored thereon. Such tangible computer-readable media can be any available media that can be accessed by a general purpose or special purpose computer. Non-limiting examples of tangible computer-readable media include physical storage and/or memory media such as RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer. For information transferred or provided over a network or another communications connection (either hardwired, wireless, or a combination of hardwired or wireless) to a computer, the computer may properly view the connection as a computer-readable medium. Thus, any such connection may be properly termed a computer-readable medium. Combinations of the above should also be included within the scope of computer-readable media.

Controlling component **428** is arranged to communicate with: field-detecting component **412** via a communication channel **430,** input component **414** via a. communication channel **432**; accessing component **416** via a communication channel **434**; comparing component **418** via a communication channel **436**; identifying component **420** via a communication channel **438**; parameter-detecting component **422** via a communication channel **440**; communication component **424** via a communication channel **442;** and verification component **426** via a communication channel **444.** Controlling component **428** is operable to control each of field-detecting component **412,** input component **414,** accessing component **416,** comparing component **418,** identifying component **420,** parameter-detecting component **422,** communication component **424** and verification component **426.**

Field-detecting component **412** is additionally arranged to detect field **406,** to communicate with input component **414** via a communication channel **446,** to communicate with comparing component **418** via a communication channel **448** and to communicate with parameter-detecting component **422** via a communication channel **460.** Field-detecting component **412** may be any known device or system that is operable to detect a field, non-limiting examples of which include an electric field, a magnetic field, and electro-magnetic field and combinations thereof. In some non-limiting example embodiments, field-detecting component **412** may detect the amplitude of a field at an instant of time. In some non-limiting example embodiments, field-detecting component **412** may detect a field vector at an instant of time. In some non-limiting example embodiments, field-detecting component **412** may detect the amplitude of a field as a function over a period of time. In some non-limiting example embodiments, field-detecting component **412** may detect a field vector as a function over a period of time. In some non-limiting example embodiments, field-detecting component **412** may detect a change in the amplitude of a field as a function over a period of time. In some non-limiting example embodiments, field-detecting component **412** may detect a change in a field vector as a function over a period of time. Field-detecting component **412** may output a signal based on the detected field.

Input component **414** is additionally arranged to communicate with database **404** via a communication channel **450** and to communicate with verification component **426** via a communication channel **452.** Input component **414** may be any known device or system that is operable to input data into database **404.** Non-limiting examples of input component **414** include a graphic user interface (GUI) having a user interactive touch screen or keypad.

Accessing component **416** is additionally arranged to communicate with database **404** via a commumcation channel **454** and to communicate with comparing component **418** via a communication channel **456.** Accessing component **416** may be any known device or system that access data front database **404.**

Comparing component **418** is additionally arranged to communicate with identifying component **420** via a communication channel **458.** Comparing component **418** may be any known device or system that is operable to compare two inputs.

Parameter-detecting component **422** is additionally arranged to communicate with identifying component **420** via a communication channel **460.** Parameter-detecting component **422** may be any known device or system that is operable to detect a parameter non-limiting examples of which include velocity, acceleration, angular velocity, angular acceleration, geodetic position, light, sound, temperature, vibrations, pressure, biometrics, contents of surrounding atmosphere and combinations thereof. In some non-limiting example embodiments, parameter-detecting component **422** may detect the amplitude of a parameter at an instant of time. In some non-limiting example embodiments, parameter-detecting component **422** may detect a parameter vector at an instant of time. In some non-limiting example embodiments, parameter-detecting component **422** may detect the amplitude of a parameter as a function over a period of time. In some non-limiting example embodiments, parameter-detecting component **422** may detect a parameter vector as a function over a period of time. In some non-limiting example embodiments, parameter-detecting component **422** may detect a change in the amplitude of a parameter as a function over a period of time. In some non-limiting example embodiments, parameter-detecting component **422** may detect a change in a parameter vector as a function over a period of time.

Communication component **424** is additionally arranged to communicate with network **408** via communication channel **214** and to communicate with communication device **204** via communication channel **224.** Communication component **424** may be any known device or system that is operable to communicate with network **408.** Non-limiting examples of communication component include a wired and a wireless transmitter/receiver.

Verification component **426** may be any known device or system that is operable to provide a request for verification. Non-limiting examples of verification component **426** include a graphic user interface having a user interactive touch screen or keypad.

Communication channel **430, 432, 434, 436, 438, 440, 442, 444,446, 448, 450, 452, 454, 456, 458, 460** and **214** may be any known wired or wireless communication channel.

Database **404** may be any known device or system that is operable to receive, store, organize and provide (upon a request) data, wherein the "database" refers to the data itself and supporting data structures. Non-limiting examples of database **404** include a memory hard-drive and a semiconductor memory.

Network **408** may be any known linkage of two or more communication devices. Non-limiting examples of database **408** include a wide-area network, a local-area network and the Internet.

FIG. 5 illustrates an example parameter-detecting component **422.**

As shown in the figure, parameter-detecting component **422** includes a plurality of detecting components, a sample of which are indicated as a first detecting component **502,** a second detecting component **504,** a third detecting component **506** and an *n*-th detecting component **508.** Parameter-detecting component **422** additionally includes a controlling component **510.**

In this example, detecting component **502,** detecting component **504,** detecting component **506,** detecting component **508** and controlling component **510** are illustrated as individual devices. However, in some embodiments, at least two of detecting component **502,** detecting component **504,** detecting component **506,** detecting component **508** and controlling component **510** may be combined as a unitary device. Further, in some embodiments, at least one of detecting component **502,** detecting component **504,** detecting component **506,** detecting component **508** and controlling component **510** may be implemented as a computer having tangible computer-readable media for carrying or having computer-executable instructions or data structures stored thereon.

Controlling component **510** is configured to communicate with; detecting component **502** via a communication channel **512;** detecting component **504** via a communication channel **514;** detecting component **506** via a communication channel **516;** and detecting component **508** via a communication channel **518.** Controlling component **510** is operable to control each of detecting component **502,** detecting component **504,** detecting component **506** and detecting component **508.** Controlling component **510** is additionally configured to communicate with controlling component **428** of **FIG. 4** via communication channel **440** and to communicate with field-detecting component **412** of **FIG. 4** via communication channel **460.**

The detecting components may each be a known detecting component that is able to detect a known parameter. For example each detecting component may be a known type of detector that is able to detect at least one of magnetic fields in any of three dimensions, electric fields in any of three dimensions, electro-magnetic fields in any of three dimensions, velocity in any of three dimensions, acceleration in any of three dimensions, angular velocity in any of three dimensions, angular acceleration in any of three dimensions, geodetic position, sound, temperature, vibrations in any of three dimensions, pressure in any of three dimensions, biometrics, contents of surrounding atmosphere, a change in electric fields in any of three dimensions, a change in magnetic fields in any of three dimensions, a change in electro-magnetic fields in any of three dimensions, a change in velocity in any of three dimensions, a change in acceleration in any of three dimensions, a change in angular velocity in any of three dimensions, a change in angular acceleration in any of three dimensions, a change in geodetic position in any of three dimensions, a change in sound, a change in temperature, a change in vibrations iin any of three dimensions, a change in pressure in any of three dimensions, a change in biometrics, a change in contents of surrounding atmosphere and combinations thereof For purposes of discussion, let; detecting component **502** be able to detect deceleration in three dimensions; detecting component **504** be able to detect sound; detecting component **506** be able to detect vibrations; and detecting component **508** be able to detect geodetic position.

In some non-limiting example embodiments, at least one of the detecting components of parameter-detecting component **422** may detect a respective parameter as an amplitude at an instant of time. In some non-limiting example embodiments, at least one of the detecting components of parameter-detecting component **422** may detect a respective parameter as a function over a period of time.

Each of the detecting components of parameter-detecting component **422** is able to generate a respective detected signal based on the detected parameter. Each of these detected signals may be provided to controlling component **510** via a respective communication channel.

Controlling component **510** is able to be controlled by controlling component **428** via communication channel **440.**

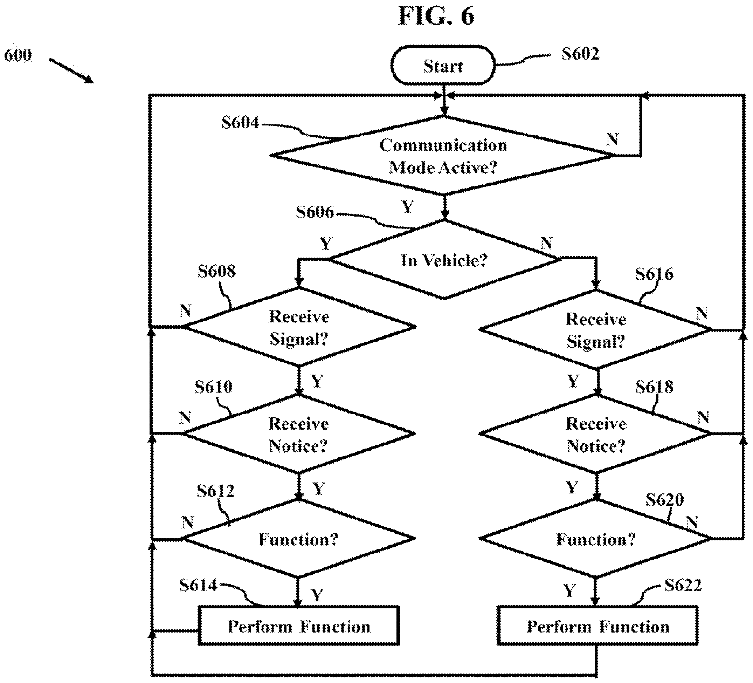

**FIG. 6** illustrates an example method **600** of communicating between two communication devices in accordance with aspects of the present invention. For purposes of discussion, method **600** will be described with reference to the situation discussed above in FIGs. 3A-C,

As shown in the figure, method **600** starts **(S602)** and it is determined whether the communication mode of the communication device is active **(S604).** If a smartphone is not currently functioning in a communication mode that allows wireless communication with other nearby smartphones, then the remainder of method **600** may not occur (**N** at **S604**). Otherwise, method **600** continues (**Y** at **S604**). In some embodiment, a smartphone may not be currently functioning in a communication mode that allows wireless communication with other nearby smartphones as a result of the user actively disabling such functioning. In some embodiments, a smartphone may function in a communication mode that allows wireless communication with other nearby smartphones as a result of the user actively enabling such functioning. In some embodiments, a smartphone may function in a communication mode that allows wireless communication with other nearby smartphones by default when the smartphone is powered.

For example, returning to **FIG. 4****,** communication device **206** may be operable to communicate with network **202** in a first mode and may be operable to communicate with communication device **204** via communication channel **224** in a second mode. For purposes of discussion, let the first mode be a cellular communication mode wherein communication device **206** is able to communicate with network **202** such that communication channel **214** is a cellular communication channel. Further, let the second mode be a wireless communication mode, non-limiting examples of which include Wi-Fi and Bluetooth, wherein communication device **206** is able to communicate with communication device **204.** In this manner, communication channel **224** might have less bandwidth restrictions and less power requirements for communication as compared with the first mode communicating over communication channel **214.**

In some example embodiments, controlling component **428** is able to instruct communication portion **424,** by way of communication channel **442,** to operate in the first mode or the second mode. For example, a user by way of the GUI of input component **414,** may enable controlling component **428** to instruct communication portion to operate in the second mode. In some example embodiments, communication device **206** may operate in the second mode of communication by default.

In any event, in some example embodiments, controlling component **428** is operable to determine whether communication component **424** is operating in the second communication mode, such that communication device **206** may wirelessly communicate with communication device **204.**

Returning to **FIG. 6**, if it is determined that communication device **206** does not have the second communication mode active (**N** at **S604**), then it continues to check for activation of the second communication mode **(S604).** For example, let communication device **206** not be operating in the second communication mode. Therefore, communication device **206** would not be able to receive communications from communication device **204** via communication channel **224.**

If it is determined that communication device **206** has the second communication mode active (**Y** at **S604**), it is then determined whether the communication device is in a vehicle **(S606).** In accordance with this aspect of the present invention, a smartphone is able to autonomously determine whether it is disposed within a vehicle. This determination enables more efficient processing for the remainder of method **600,** as will be described in more detail below, because further determinations will be divided between in-vehicle situations **(S608, S610, S612** and **S614)** and non-in-vehicle situations **(S616, S618, S620** and **S622).**

For example, returning to **FIG. 4****,** let communication device **206** be operating in the second communication mode, wherein communicates with communication device **204** via communication channel **224.** At this point, communication device **206** may determine that it is in vehicle **102** by any known method. In some embodiments, communication device **206** may determine that it is in vehicle **102** by: 1) detecting a field; 2) detecting at least one other parameter; 3) generating a signature based on the detected field and the detected at least one other parameter; and 4) comparing the generated signature with previously stored signatures associated with the vehicle. Examples of embodiments where communication device **206** may determine that it is in vehicle **102** are described in greater detail as disclosed in co-pending US patent Application No. 14/072,231 filed November 5, 2013. In some embodiments, communication device **206** may determine that it is in vehicle **102** in a manner disclosed in co-pending US patent Application No. 14/095,156 filed December 3, 2013, In some embodiments, communication device **206** may determine that it is in vehicle **102** in a manner disclosed in U.S. Application No. 14/105,744 filed December 13, 2013. In some embodiments, communication device **206** may determine that it is in vehicle **102** in a manner disclosed in U.S. Application No. 14/105,934 filed December 13, 2013.

Returning to **FIG. 6****,** if it is determined that communication device **206** is in a vehicle **(Y** at **S606),** then it is determined whether a vehicle mode signal is received (**S608**). A vehicle mode signal is a signal from a communication device indicating that it is in a vehicle and is communicating through the wireless channel to other communication devices. If the smartphone is does not receive a vehicle mode signal from another communication device, then the remainder of method **600** may not occur **(N** at **S609),** Otherwise, method **600** continues **(Y** at **S608).** In some embodiment, although a smartphone may enabled and ready to communicate with other communication devices there may be situations where there are no communication devices nearby that are ready or able to provide vehicle mode signals. In such situations, the smartphone would essentially wait to receive vehicle mode signals.

For example, returning to **FIG. 3A****,** for purposes of discussion, let communication device **204** be able to operate in a second communication mode, wherein communication device **204** may transmit a signal along communication channel **224** to communication device **206**. To simplify the discussion, let the second communication mode be a vehicle mode, indicating that communication device **204** is in a vehicle.

If it is determined that a vehicle mode signal is not received **(N** at **S608**), then it continues to check for activation of the second communication mode **(S604).** For example, returning to **FIG. 4****,** in the event that communication device **204** is not transmitting a signal indicating that it is operating in a vehicle mode or communication device **206** is out of range of receiving such a communication, then communication component **424** will not receive such a signal This situation may occur when no other communication devices are within range of a receiving communication device.

Returning to **FIG. 6****,** if it is determined that a vehicle mode signal is received **(Y** at **S608).** then it is determined whether a subsequent notice signal is received **(S610).** A subsequent notice signal is a signal received after the vehicle mode signal and that provides further information related to the communication device providing the subsequent notice signal. If the smartphone does not receive a subsequent notice signal from another communication device, then the remainder of method **600** may not occur **(N** at **S610).** Otherwise, method **600** continues **(Y** at **S610).** In some embodiment, although a smartphone may enabled and ready to communicate with other communication devices, and may have received vehicle mode signals from at least one other nearby communication device, there may be situations where there are no communication devices nearby that are ready or able to provide vehicle subsequent notice signals. In such situations, the smartphone would essentially wait to receive subsequent notice signals.

For example, returning to **FIG. 4****,** in the event that communication device **204** is transmitting a signal indicating that it is operating in a vehicle mode and communication device **206** is within range of receiving such a communication, then communication component **424** may receive the signal from communication device **206**.

Returning to **FIG. 3A****, in** an example implementation, communication device **204** transmits a vehicle mode signal by way of communication channel **224** to communication device **206**. In this manner, communication device **206** is aware that communication device **204** is in a vehicle mode and communication device **206** awaits a subsequent signal from communication device **204.**

A subsequent signal from communication device **204** may be a notice signal having information therein. Non-limiting examples of types of information in the notice signal include: geodetic location of the vehicle in which the communication device that is sending the notice signal is disposed; velocity of the vehicle in which the communication device that is sending the notice signal is disposed; acceleration of the vehicle in which the communication device that is sending the notice signal is disposed; a change in geodetic location of the vehicle in which the communication device that is sending the notice signal is disposed; a change in velocity of the vehicle in which the communication device that is sending the notice signal is disposed; a change in acceleration of the vehicle in which the communication device that is sending the notice signal is disposed; identification, e.g., make mode, year, of the vehicle in which the communication device that is sending the notice signal is disposed; relay of information from another vehicle in which another communication device that is sending the original notice signal is disposed; destination information of the vehicle in which the communication device that is sending the notice signal is disposed; social networking information of the owner of the communication device within the vehicle in which the communication device that is sending the notice signal is disposed; and combinations thereof.

Returning to **FIG. 6****,** if it is determined that a subsequent notice signal is not received **(N** at **S610),** then it continues to check for activation of the second communication mode **(S604).** For example, returning to **FIG. 4****,** in the event that communication device **204** does not transmit a subsequent notice signal or communication device **206** is out of range of receiving such a signal, then communication component **424** will not receive such a signal.

Returning to **FIG. 6****,** if a subsequent notice signal is received **(Y** at **S610**), then it is determined whether a function is required **(S612).** At this point in method **600**, a smartphone will have autonomously received information from a nearby smartphone wherein the information relates to aspects of the nearby smartphone. In some situations the information relating to aspects of the nearby smartphone may affect or be important to its user (and by extension the vehicle of the user in which the smartphone is currently disposed). Therefore the smartphone may be able to autonomously perform a function based on the received information that relates to aspects of the nearby smartphone. If the smartphone does not need to perform a function based on the received information from the nearby smartphone, then the remainder of method **600** may not occur **(N** at **S612),** Otherwise, the function is performed **(Y** at **S612).**

For example, returning to **FIG. 4****,** in the event that communication device **204** is transmitting a notice signal and communication device **206** is within range of receiving such a signal, then communication component **424** may receive the notice signal Controlling component **428** may then determine whether a function is required.

In some example embodiments, database **404** may store associations between information of notice signals and functions. Non-limiting examples of functions include providing an audible, tactile (vibrating) and/or a visual warning. For example, information of a notice signal indicating a collision course based on any one of position, velocity and acceleration of a vehicle with which a communication device disposed may be associated with a function prompting a warning alert. The warning alert may be any one of a tactile alert, audible alert, visual alert and combinations thereof that may be generated by the communication device receiving the notice signal.

In some example embodiments, controlling component **428** may access database **404** by way of access component **416.** Controlling component **428** may therefore determine whether information of a notice signal has an associated function that should be performed.

Returning to **FIG. 6****,** if a function is not to be performed **(N** at **S612),** then device **204** continues to check for activation of the second communication mode **(S604).** For example, returning to **FIG. 4****,** in the event that controlling component **428** determines that information of a receive notice signal has no associated fonction that should be performed, then no function is performed.

Returning to **FIG. 6****,** if it is determined that a function is to be performed **(Y** at **S612),** then the function is performed **(S614).** For example, returning to **FIG. 3B****,** consider that communication device **204** transmits a notice having information related to its current location and velocity associated with arrow **314**. In this case, communication device **206** may determine that a collision is imminent. As shown in **FIG. 4****,** controlling component **428** may determine, through an association stored in database **404**, that the information related to the current location and direction of vehicle **102** (in which communication device **206** is disposed) corresponds to an imminent collision and therefore initiates a predetermined action to generate an alert.

Returning to **FIG. 3B****,** communication device **206** provides an alert as shown by item **316.** In an example embodiment, the alert includes an audible tactile and visual alert to warn the driver of vehicle **104.** As a result, as shown in **FIG. 3C****,** driver of vehicle **104** is able to change direction (or speed) as shown by arrow **316** thus avoiding a collision with vehicle **102.**

Returning to **FIG. 6****,** method **600** then it continues to check for activation of the second communication mode **(S604).**

If communication device **206** is not in a vehicle **(N** at **S606),** then it is determine whether a mode signal is received **(S616),** whether a subsequent notice is received **(S618),** whether a function is to be performed **(S620),** and if so, then the function is performed **(S622).** These portions of method **600** are similar to the previously discussed portions of method **600** (**S608**, **S610, S612** and **S614,** respectively). The difference being that, in this portion of method **600 (S616, S618, S620** and **S622)** communication device **206** is not in a vehicle.

For example, if the communication device is not in a vehicle (N at **S616**), and a mode signal is received (**Y** at **S616**) then the communication device will be aware of nearby communication devices that are able to wireless communicate. This may occur for example if the person carrying the communication device is walking.

Further, if a subsequent notice signal is received **(Y** at **S618),** then the communication device will be aware of at least one nearby communication device that is providing additional information. As such, returning to **FIG. 4****,** any associations with which controlling component **428** accesses in database **404** are limited to those that do not deal with communication device **204** being in a vehicle.

For example, along this portion of method **600 (S616, S618, S620, S622),** and applicable situation may deal with a user walking with communication device **206.** For example, consider the situation where the user of communication device **204** is within a social network of the user of communication device **206.** Further, let the user of negation device **206** be near the user carrying communication device **204,** In accordance with this aspect of the present invention, communication device **206** may determine an association between the proximity of communication device **204** and providing an alert. As such, communication device **206** may ultimately perform a function **($622)** alerting the user of communication device **206** that the user, who is within the social network of the user of communication device **206,** is proximate to the location of the user of communication device **204,**

In the example embodiment discussed above with reference to **FIG. 6****,** communication device **206** is able to perform a function based on received signals from communication device **204.** As mentioned previously, a similar method may be performed by communication device **204** based on received signals from communication device **204**. Further, in the example embodiment discussed above with reference to **FIG. 6****,** communication device **206** is able to perform a function based on received signals from a single communication device. It should be noted that in accordance with aspects of the present invention, communication device **206** may be able to perform a function based on received signals from any one of a plurality of communication devices.

The example embodiments discussed above are drawn to enabling a wireless communication device two wireless communication device communication mode. Once in this mode, the example embodiments discussed above are additionally drawn to determining, via a communication device, whether the communication device is within a vehicle using fields and other parameters associated with the vehicle. The example embodiments discussed above are additionally drawn to enabling a communication device to receive: 1) communication mode signals from nearby wireless communication devices; and 2) a subsequent notice from these nearby wireless communication devices. Finally, the examples discussed above are additionally drawn to enabling a communication device to autonomously perform various functions based on the subsequent notices.

In essence, aspects of the present invention enable a smartphone to autonomously and wirelessly communicate with nearby smartphones and to autonomously perform functions based on these wireless communications.

In accordance with aspects of the present invention discussed above, the sensors and functionalities of smartphones can be used to supplement or even replace the known vehicle-based techniques of vehicle telematics. More specifically, smartphone-to-smartphone (when both phones are in Vehicle Mode), smartphone-to-infrastructure and infrastructure-to-smartphone communications (again, when the smartphone is in Vehicle Mode) can provide drivers with a wide range of telematics services and features, while resulting in little or no additional cost to the vehicle driver (depending on her smartphone contract) or the vehicle manufacturer (because it does not have to provide the purchaser of the vehicle with a smartphone and also doesn't have to embed costly vehicle telematics equipment in the vehicle). To be able to do so, however, the smartphone again has to be able to "know" that it is in Vehicle Mode and be able to determine in what vehicle it is. For various applications, it may be necessary to determine if the smartphone is in the vehicle that is owned by the smartphone user. Aspects of the present invention enable a smartphone to know that it is in Vehicle Mode based on detected magnetic, electric, magneto-electric fields and combinations thereof.

Further in accordance with the present invention, a smartphone may utilize its magnetometer function to periodically measure the efectromagnetic levels sensed at the smartphone's current location. The smartphone uses its processing capabilities to try to map the periodic electromagnetic levels sensed by the smartphone with the vehicular electromagnetic signatures stored in library. If the periodic electromagnetic levels sensed by the smartphone match any of the specific vehicle signatures stored in the library, then the processor of the smartphone may generate and/or otherwise output a signal indicating that the smartphone is located in the specific vehicle, which in turn will be used by the Vehicle Mode detection method to trigger certain functions.

The Vehicle Mode relevant sensor suite may be monitored at intervals depending on detected speed and location, for example, up to several times per second. The magneto metric sensor output may be monitored dependent on the accelerometer output as this will indicate a movement of the phone either within the vehicle environment or of the vehicle itself

In accordance with another aspect of the present invention, collisions between pedestrians and vehicles may be reduced. For example, when a pedestrian walks into the pathway of a vehicle, the smartphone of the pedestrian will provide a warning to the pedestrian of the oncoming vehicle. Further, the smartphone of the driver of the oncoming vehicle will provide a warning to the driver of the vehicle.

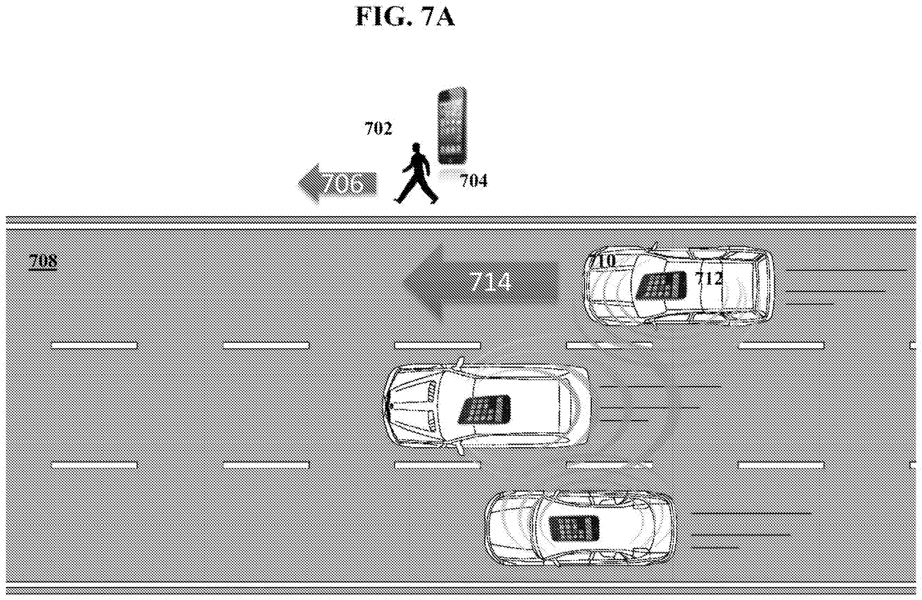

As shown in **FIG. 7A** a person **702,** at a time *t₁*, is carrying a smartphone **704** in accordance with aspects of the present invention. Person **702** is walking with a velocity, indicated by arrow **706,** adjacent to a road **708.** On road **708** are a plurality of vehicles, including vehicle **710** having a smartphone **712** therein. Vehicle **710** is driving with a velocity, indicated by arrow **714,** adjacent to a road **708**.

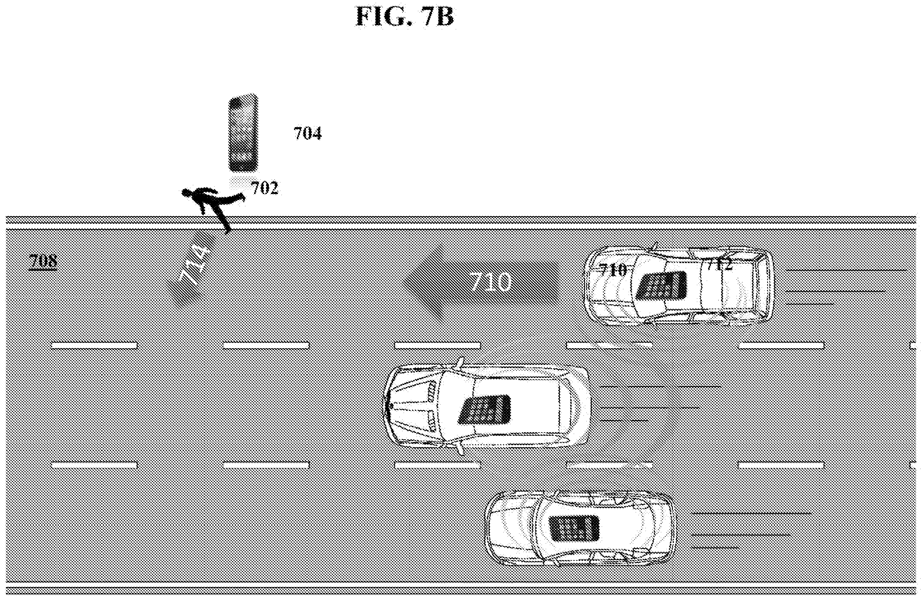

As shown in **FIG. 7B** person **702,** at a time *t₂*, is walking with a velocity, indicated by arrow **714,** into road **708** and into the path of vehicle **710**. In such a situation, a collision might happen between person **702** and vehicle **710,** However, in accordance with aspects of the present invention, smartphone **704** would warn user **702** of oncoming vehicle **710** and smartphone **712** would warn the driver of vehicle **710** of user **702.** Such warnings may help to avoid such a collision..

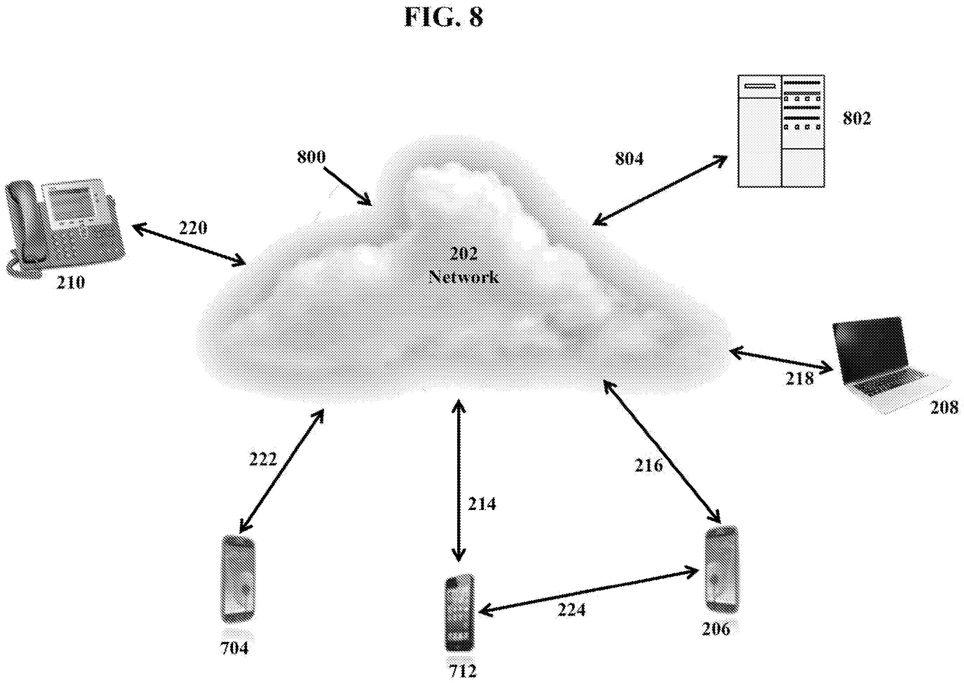

The geodetic location of a smartphone is detected automaticany by the smartphone. Further, the velocity of the smartphone is automatically detected by the smartphone. This location and velocity data is uploaded to a server. This will be described in greater detail with reference to **FIG. 8****.**

**FIG. 8** illustrates a communication system **800** in accordance with aspects of the present invention.

Communication system **800** is similar to communication system **200** discussed above with reference to **FIG. 2****.** Communication system **800** however further includes a server **802** in communication with network **200** via a communication channel **804,**

In this example embodiment, server **802** is operable to provide a likelihood of collision between two smartphone users based on parameters associated with the smartphones. For example, the position and velocity of each smartphone may be used to determine a likelihood of collision between the two smartphones. Further, other criteria, non-limiting examples of which include the time of year, time of week, time of day and whether may be used to more accurately determine a likelihood of collision between the two smartphones. Still further, thresholds of criteria may be set to filter unlikely collisions between the two smartphones, thereby reducing processing resources,

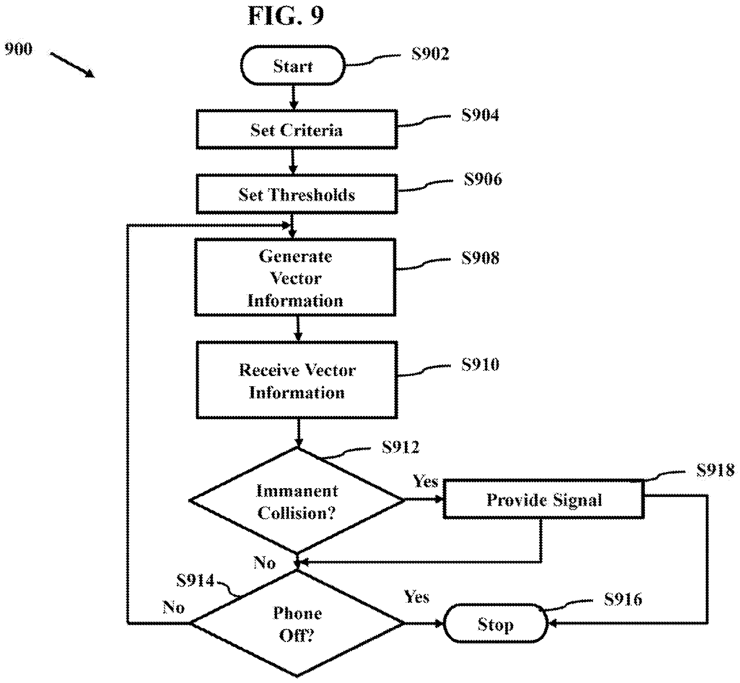

The operation of system **800** will be described in greater detail with reference to **FIGs. 9-11B****.**

**FIG. 9** illustrates an example method **900** of avoiding a collision, between people by communicating between two communication devices in accordance with aspects of the present invention.

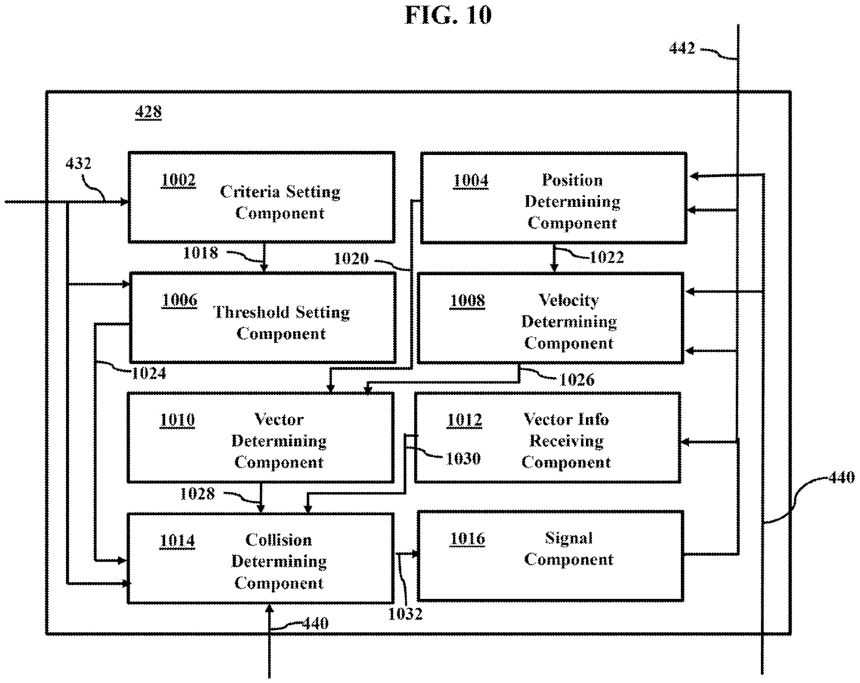

As shown in the figure, method **900** starts (**S902**) and criteria are set (**S904**). For example, as shown in **FIG. 4****,** controlling component **428** may set criteria. This will be described with additional reference to **FIG. 10****.**

**FIG. 10** illustrates an exploded view of an example embodiment of controlling component **428** in accordance with aspects of the present invention.

As shown in the figure, controlling component **428** includes a criteria setting component **1002,** a position determining component **1004,** a threshold setting component **1006,** a vector determining component **1010,** a velocity determining component **1008,** a vector information receiving component **1012,** a collision determining component **1014** and a signal component **1016.**

In this example, criteria setting component **1002,** position determining component **1004,** threshold setting component **1006,** vector determining component **1010,** velocity determining component **1008**, vector information receiving component **1012,** collision determining component **1014** and signal component **1016** are illustrated as individual devices. However, in some embodiments, at least two of criteria setting component **1002,** position determining component **1004,** threshold setting component **1006,** vector determining component **1010,** velocity determining component **1008,** vector information receiving component **1012,** collision determining component **1014** and signal component **1016** may be combined as a unitary device. Further, in some embodiments, at least one of criteria setting component **1002,** position determining component **1004,** threshold setting component **1006,** vector determining component **1010,** velocity determining component **1008,** vector information receiving component **1012,** collision determining component **1014** and signal component **1016** may be implemented as a computer having tangible computer-readable media for carrying or having computer-executable instructions or data structures stored thereon.

Criteria setting component **1002** is arranged to communicate with input component **414** via communication channel **432** and to communicate with threshold setting component **1006** via a communication channel **1018,** Criteria setting component **1002** be any system or device that is able to establish a criterion or criteria to filter unlikely collisions. Non-limiting examples of criteria to filter unlikely collisions include day of year, day of week, time of day, geographic location, temperature, precipitation, ambient brightness and combinations thereof.

For example, a December 25^{th}, Christmas day, might historically provide less pedestrian and vehicular traffic in a town area as compared to a January 1^{st}, New Year's Day. As such, the day of the year may be a criterion to filter unlikely collisions.

As another example, a Saturday might historically provide more pedestrian and vehicular traffic in a town area as compared to a Sunday. As such, the day of the week may be a criterion to filter unlikely collisions.

As another example, the time between 4:00 and. 5:00 pm might historically provide more pedestrian and vehicular traffic in a town area as compared to the time between 1:00 and 3:00 pm. As such, the time of day may be a criterion to filter unlikely collisions.

As another example, one specific part of town might historically provide more pedestrian and vehicular traffic as compared to another part of town. As such, the geographic location may be a criterion to filter unlikely collisions.

As another example, if the outside temperature is below 32° F, there is an increased likelihood of ice on the streets, which will required more advanced warning for a driver of a vehicle to safely stop to avoid a collision. As such, the temperature may be a criterion to filter unlikely collisions.

As another example, if it is raining, there is an increased likelihood of the streets being slippery, which will required more advanced warning for a driver of a vehicle to safely stop to avoid a collision. As such, the precipitation may be a criterion to filter unlikely collisions.

As another example, if the area is not well-lit, a driver of a vehicle may have less warning for to safely stop to avoid a collision. As such, the ambient brightness may be a criterion to filter unlikely collisions.

In some embodiments, criteria setting component **1002** is operable to set criteria via an instructions by input component **414** through communication channel **432.** For example, a user may set criteria through a GUI. In some embodiments, criteria setting component **1002** may have criteria pre-installed when communication device **206** is manufactured.

Before moving on to the further description of method **900,** the remainder of the components of controller **428** in **FIG. 10** will be briefly introduced,

Position determining component **1004** is arranged to communicate with communication component **424** via communication channel **442,** to communicate with vector determining component **1010** via a communication channel **1020,** to communicate with velocity determining component **1008** via a communication channel **1022** and to communicate with parameter detector **422** via communication channel **440.** Position determining component **1004** may be any system or device that is able to determine the position of communication device **206.**

In some embodiments, position determining component **1004** is operable to determine a position of communication device **206** by detected parameters, wherein parameter detector **422** provides information via communication channel **440.** For example, in some embodiments, parameter detector **422** may include a GPS receiver that provides a position signal. In some embodiments, parameter detector **422** may include WiFi hotspot detectors that are able to provide a position signal. In some embodiments, position determining component **1004** is operable to determine a position of communication device **206** by receiving a position signal through communication component **424** through communication channel **442.** For example, communication component **424** may receive a position signal from an external GPS system via communication channel **214,**

Threshold setting component **1006** is additionally arranged to communicate with input component **414** via communication channel **432** and to communicate with collision determining component **1014** via a communication channel **1024.** Threshold setting component **1006** may be any device or system that is able to establish a threshold associated with the criteria in criteria setting component **1002.**

In some embodiments, threshold setting component **1006** is operable to set criteria via an instruction by input component **414** through communication channel **432.** For example, a user may set thresholds for each criterion through a GUI. In some embodiments, criteria setting component **1002** may have thresholds for each criterion pre-installed when communication device **206** is manufactured.

Velocity determining component **1008** is additionally arranged to communicate with communication component **424** via communication channel **442,** to communicate with vector determining component **1010** via a communication channel **1026** and to communicate with parameter detector **422** via communication channel **440.** Velocity determining component **1008** may be any system or device that is able to determine the position of communication device **206.**

In some embodiments, velocity determining component **1008** is operable to determine a velocity of communication device **206** by detected parameters, wherein parameter detector **422** provides information via communication channel **440.** For example, in some embodiments, parameter detector **422** may timing and position information for two times, such that a velocity may be determined. In some embodiments, velocity determining component **1008** is operable to determine a velocity of communication device **206** by receiving a velocity signal through communication component **424** through communication channel **442.** For example, communication component **424** may receive a velocity signal from an external GPS system via communication channel **214.**

Vector determining component **1010** is additionally arranged to communicate with collision determining component **1014** via a communication channel **1028.** Vector determining component **1010** may be any device or system that is able to determine a vector of communication device **206** based on the position and velocity of communication device **206.**

In an example embodiment, vector determining component **1010** determines a vector of communication device **206** from the position of communication device **206** as provided by position determining component **1004** via communication channel **1020** and from the velocity of communication device **206** as provided by velocity determining component **1008** via communication channel **1026.**

Vector information receiving component **1012** is arranged to communicate with communication component **424** via communication channel **442** and to communicate with collision determining component **1014** via a communication channel **1030.** Vector information receiving component **1012** may be any system or device that is able to receive vector information associated with another communication device. For example, communication component **424** may receive vector information describing the location and velocity of nearby communication devices. As shown in **FIG. 4****,** this information may be provided directly from the devices themselves, e.g. communication device **224,** or through network **202.**

Collision determining component **1014** is additionally arranged to communicate with communication component **424** via communication channel **442,** to communicate with input component **414** via communication channel **432** and to communicate with signal component **1016** via a communication channel **1032**. Collision detennining component **1014** may be any system or device that is able to determine a likelihood of collision between a person having communication device **206** thereon (or vehicle having communication device **206** therein) and another communication device based on the received vector information of the other communication device, the determined position of communication device **206** and the determined velocity of communication device **206.**

Collision determining component **1014** determines if thresholds are met of set criteria and if the vector of communication device **206** in relation to the received vector of another communication device will likely result in a collision.

Signal component **1016** may be any system or device that is able to provide a signal associated with the likelihood of collision. In some embodiments, the signal is a warning signal non-limiting examples of types of warning signals includes audible, visual, tactile and combinations thereof. In some embodiments, the signal is an activation signal to activate a function in communication device **206.** In some embodiments, the signal is an activation signal to be transmitted to another device to activate a function in such other device.

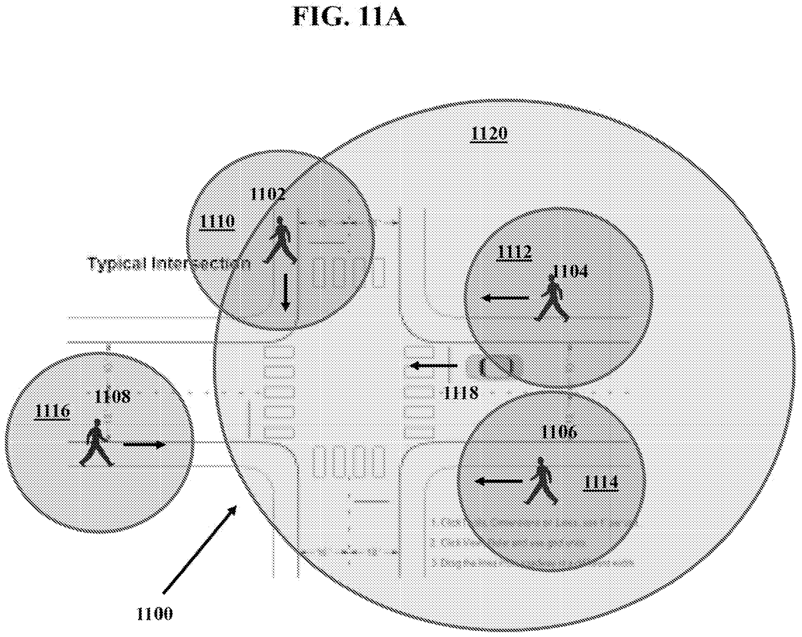

Returning to **FIG. 9****,** after the criteria are set **(S904),** thresholds are set **(S906),** For example, as shown in **FIG. 10****,** threshold setting component **1006** sets thresholds for criteria provided by criteria setting component **1002.** The set thresholds adjust the warning area for determining the likelihood of a collision. This will be described with additional reference to **FIGs. 11A-11B****.**

As shown in **FIG. 11A****,** a person **1102,** a person **1104,** a person **1106** and a person **1108** are walking near an intersection **1100.** A vehicle **1118** is driving towards intersection **1100.** Each of persons **1102, 1104, 1106** and **1108** has a respective smartphone (not shown) registered with server **802** of **FIG. 8****,** that is able to provide its respective location and velocity data to server **802.** Similarly, the smartphone (not shown) of the driver of vehicle **1118** is additionally registered with server **802** and is able to provide its respective location and velocity data to server **802.**

Each smartphone has a warning area associated therewith. In some embodiments a smartphone determines the area of activation. In some embodiments, server **802** determines the area of activation.

In some embodiments, the size of the area of activation is determined by a threshold setting component such as threshold setting component **1006** of **FIG. 10****,** More specifically, in such embodiments, the size of the area of activation is based on the thresholds set by threshold setting component of the criteria set by criteria setting component **1002.** For example, the warning area may be based on the velocity of the smartphone. In another example, the size of the area of activation is based on the magnitude of the velocity of the smartphone. In other examples, the size of the area of activation is based on other detectable parameters, non-limiting examples of which include weather conditions, time of day, age of user, speed of the vehicle, traffic and combinations thereof In some embodiments the shape of the area of activation is based on other detectable parameters, non-limiting examples of which incl ude weather conditions, time of day, age of user, speed of the vehicle, traffic and combinations thereof

For example, in one embodiment, threshold setting component **1006** may establish a time of day threshold, *tₜₕₜ*, associated with the time of day criterion such that *tₛₛ* < *tₜₕₜ* < *tₛᵣ*, wherein *tₛₛ* is the time of the most recent sunset of the geographic location associated with the position, and wherein *tₛᵣ* is the time of sunrise, after *tₛₛ,* of the geographic location associated with the position. In other words, in this example, threshold setting component **1006** sets a threshold to determine when it is nighttime. By determining when it is nighttime, a wanting area may be adjusted so as to provide a driver of a vehicle with more time to react to an immanent collision.

In another embodiment, for example, criteria setting component **1006** may establish a second criterion to filter unlikely collisions as temperature of the geographic location associated with the position. In such a case, criteria setting component **1006** may establish a temperature threshold, *tₜₕₜₑₘₚ*, associated with the temperature criterion such that *tₜₕₜₑₘₚ* < 32° F. By determining when it is below freezing, a warning area may be adjusted so as to provide a driver of a vehicle with more time to react to an immanent collision because the streets may be covered in ice.

If an area of activation of one smart phone intersects with an area of activation of another smartphone, then a determination of impending collision may be made. Excluding mutually exclusive areas of activation reduces processing resources for unlikely collisions.

For example, as shown in **FIG. 1** **1A****,** at a time *t₁*, persons **1102, 1104, 1 106** and **1108** have areas of activation **1110, 1112, 1114** and **1116,** respectively, whereas vehicle **1118** has area of activation **1120.** In this example, vehicle **1118** is driving faster than persons **1102, 1104, 1106** and **1108** are walking. For purposes of discussion, presume that each of persons **1102, 1104, 1 106** and **1108** and the person driving vehicle **1118** have similar reaction times. Since, vehicle **1118** is moving much faster than persons **1102, 1104, 1106** and **1108,** for a given reaction time, vehicle **1118** will travel a much greater distance than persons **1102, 1104, 1106** and **1108.** To account for this greater distance, area of activation **1120** is much larger than any of areas of activation **1110, 1112, 1114** and **1116.**

Therefore, for purposes of discussion, in this example, a threshold setting component in the smartphone (not shown) of vehicle **1118** will have set a threshold associated with velocity of vehicle **1118** to account for the needed reaction time of the driver to stop to prevent a collision,

it is clear that areas of activation **1110, 1112** and **1114** from persons **1102, 1 104** and **1106,** respectively, intersect with area of activation **1120** of vehicle **1118.** As such, server **802** will determine whether the smartphone in vehicle **1118** is likely to collide with any of the smartphones carried by persons **1102, 1104** or **1106,**

Returning to **FIG. 9****,** after the thresholds are set **(S906),** vector information is generated **(S908).** For example, as shown in **FIG. 10****,** position determining component **1004** determines a position of communication device **206** at a first time *t₀*.

In some embodiments, position determining component 1004 provides position information of the position of communication device **206** at time *t₀* to vector determining component **1010** via communication channel **1020.** Further, velocity determining component **1008** provides velocity information of communication device **206** at time *t₀* to vector determining component **1010** via communication channel **1026.** With the position and velocity of communication device **206,** vector determining component **1010** generates the vector of communication device **206** at time *t₀*.

In other embodiments, position determining component **1004** provides position information of the position of communication device **206** at time *t₀* to velocity determining component **1008** via communication channel **1022.** Position determining component **1004** then provides position information of the position of communication device **206** at a future time *t₁* to velocity determining component **1008** via communication channel **1022.** With the two positions and two times, velocity determining component **1008** determines the average velocity of communication device **206.** Velocity determining component **1008** then provides the position information and the determined velocity information of communication device **206** at time *t₁* to vector determining component **1010** via communication channel **1026.** With the position and velocity of communication device **206,** vector determining component **1010** generates the vector of communication device **206** at time *t₁*.

Returning to **FIG. 9****,** after the vector information is generated **(S908),** vector information from other devices is received **(S910).** For example, as shown in **FIG. 10****,** vector information receiving component **1012** receives vector information related to other communication devices via communication channel **442.**

For example, as shown in **FIG. 11A****,** let the smartphone in vehicle **1118** correspond to communication device **206** of **FIG. 4****.** With respect to receiving vector information, as with additional reference to **FIG. 11A****,** communication device **206** may receive vector information from the smartphones of persons **1102, 1104, 1106,** and **1108.** As shown in **FIG. 4****,** this vector information may be provided via network **202** or directly to communication component **424** via communication channel **224.**

Returning to **FIG. 9****,** after vector information from other devices is received **(S910),** it is determined whether a collision is immanent **(S912).** For example, as shown in **FIG. 10****,** collision determining component **1014** determines whether a collision is immanent.

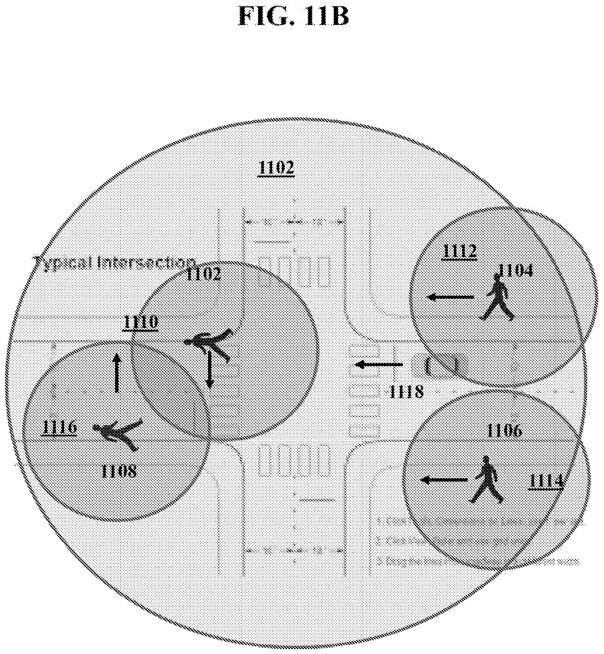

As shown in **FIG. 11B****,** at a time *t₂*, areas of activation **1110, 1112, 1114** and **1116** from persons **1102, 1104, 1106** and **1108,** respectively, intersect with area of activation **1120** of vehicle **1118.** As such, collision determining component **1014** will determine whether the smartphone in vehicle **1118** is likely to collide with any of the smartphones carried by persons 1**102, 1104** or **1106.** In this case, there is an increased likelihood that vehicle **1118** might collide with persons **1102** and/or **1108,**

Returning to **FIG. 9****,** if a collision is not immanent (No at **S912**), it is then determined whether the communication device is off **(S914).** If it is determined that the communication device is off (Yes at **S914**), then method **900** stops **(S916),**

Alternatively, if it is determined that the communication device is still on (No at **S914**), then vector information is again generated (return to **S908**).

If a collision is immanent (Yes at **S912**), then a signal is provided **(S918).** For example, as shown in **FIG. 10****,** consider the situation where collision determining component **1014** determines that a collision is immanent. This will be described with additional reference to **FIG. 11B****.**

As shown in **FIG. 11B****,** at a time *t₂*, areas of activation **1110, 1112, 1114** and **1116** from persons **1102, 1104, 1106** and **1108,** respectively, intersect with area of activation **1120** of vehicle **1118.** For purposes of discussion, returning to **FIG. 10****,** suppose that vector information receiving component **1012** provides vector information to collision determining component **1014** associated with the vectors of smartphones of persons **1102, 1104, 1106,** and **1108.** Further, in this example, collision determining component **1014** can determine that the vector of communication device **206** in vehicle **1118** will likely intersect with the vectors of the smartphones of persons **1102** and **1108.** In other words, vehicle **1118** will likely collide with persons **1102** and **1108,**

As such, as shown in **FIG. 10****,** collision determining component **1014** may instruct signal component **1016** to provide a warning signal of the impending collision. In some embodiments, signal component **1016** provides a warning signal to the user of communication device **206.** In some embodiments, signal component **1016** provides a warning signal to communication component **424,** wherein the warning signal is relayed to communication devices within the area of activation of communication component **424.** In some embodiments, signal component **1016** provides a warning signal to communication component **424,** wherein the warning signal is relayed to server **802** so that server **802** may provide a wanting to other communication devices.

Further, in some embodiments, signal component **1016** provides an activation signal to communication component **424,** wherein the activation signal is relayed to traffic management systems so as to adjust traffic flow. For example, communication component **424** may provide the activation signal to traffic regulation devices, e.g., a traffic light, to regulate traffic, As such, pre-programmed traffic regulation devices may operate, not just in accordance with pre-programmed timings, but further in accordance with receipt of activation signals that provide an advanced warning of an impending collision in order to reduce the risk of collisions,

Returning to **FIG. 9****,** after the signal is provided **(S918),** method **900** stops **(S916).**

In the example method **900** discussed above, communication device **206** within vehicle **1118** determines a likelihood of collision, and provides a wanting. It should be noted that the smartphones of persons **1102, 1104, 1106** and **1108** may additionally provide similar warnings.

In other embodiments, the collision determination and warning may be performed via an offsite server. For example, returning to **FIG. 8****,** in some embodiments, each communication device may provide position and vector information to server **802.** Server **802** may then make collision determinations in a manner similar to collision determining component **1014.** Server **802** may then transmit warning signals to corresponding communication devices as appropriate,

For example, as shown in **FIG. 11B****,** at a time *t₂*, areas of activation **1110, 1112, 1114** and **1116** from persons **1102, 1104, 1106** and **1108,** respectively, intersect with area of activation **1120** of vehicle **1118.** As such, server **802** will determine whether the smartphone in vehicle **1118** is likely to collide with any of the smartphones carried by persons **1102, 1104** or **1106.** In this case, there is an increased likelihood that vehicle **1118** might collide with persons **1102** and/or **1108.** As such, server **802** may instruct the smartphones of persons **1102, 1108** and the driver of vehicle **1118** of the impending collision.

When the smartphones of persons **1102, 1 108** and the driver of vehicle **1118** receive the instruction from server **802,** in each smartphone may provide a warning to each respective user.

In some embodiments, a change in location of one smartphone may provide a warning to another smartphone. For example, as shown in FIGs. 11A-B, person **1102** changes location while in area of activation **1102** such that person **1102** is in the oncoming path of vehicle **1118.** Such a location greatly increases the likelihood of a collision. Thus the smartphone of person **1102** and the smartphone of driver **1118** may be warned.

In some embodiments, a change in direction or change in velocity of one smartphone may provide a warning to another smartphone. For example, as shown in FIGs. 11A-B, person **1108** changes direction while in area of activation **1102.** Such a change in direction into the oncoming path of vehicle **1118** greatly increases the likelihood of a collision. Thus the smartphone of person **1108** and the smartphone of driver **1118** may be warned.

In some embodiments, the relative position and/or velocity of two smartphones is used to determine a likelihood of a collision. Such a determined likelihood will prompt a warning by server **802.**

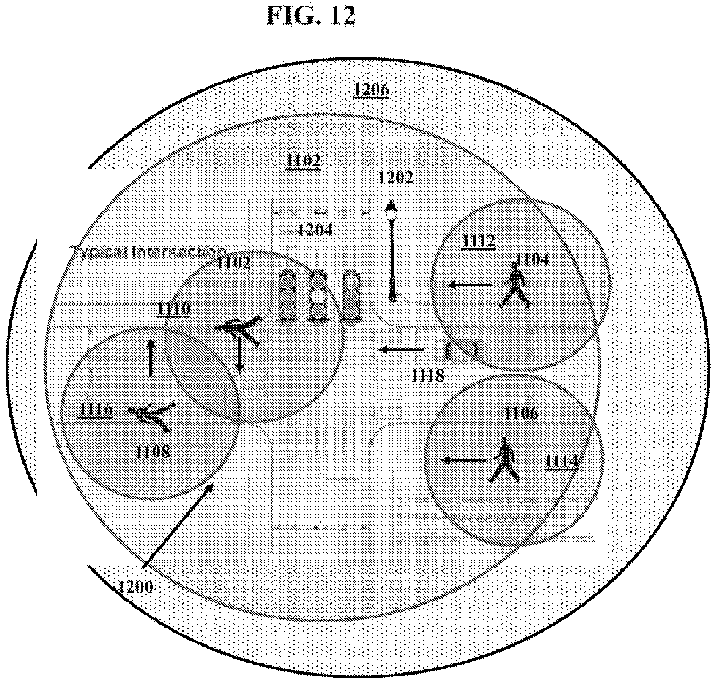

In the example embodiments discussed above, the commamcation devices communicate with one another either directly or via a network. It should be noted that the network of indirect communication may include a dedicated short range communications network (DSRC), This will be described with reference to **FIG. 12****.**

**FIG. 12** illustrates an intersection **1200,** which is similar to intersection **1100** of **FIG. 11A****,** but further includes DSRC nodes as DSRC light post **1202** and DSRC traffic light **1204.**

In this embodiment, DSRC light post **1202** and DSRC traffic light **1204** provide a local wireless network having an area **1206.** Any of the conununication devices within area **1206** may communicate with one another via DSRC light post **1202** or DSRC traffic light **1204.** Although the method of device communication may be adjusted to fit the DSRC nodes, the operation of the novel aspects of the present invention, remain the same.

In the examples discussed above with reference to **FIGs. 7A-12****,** the smartphones are used by walking pedestrians and vehicle drivers. It should be noted that these are nonlimiting examples. In accordance with aspects of the present invention, any person using a smartphone, wherein the person is moving in any way, may implement a warning system, e.g., a person riding a bicycle.

Further, in some embodiments, activation signals provided by communication devices are used to continuously modify traffic flow by informing one another through DSRC nodes. The constant sharing of such activation signals between communication devices through DSRC nodes provide an advanced warning of an impending collision in order to reduce the risk of collisions.

Further, in some embodiments, an autonomous vehicle or autonomous device may additionally employ aspects of the present invention. In this manner, each communication device used by a person may be a probe within a network of communication devices and autonomous vehicles/devices. In such a transportation infrastructure, each communication device used by a person is an interface between the human person and the machine ecosystem. Therefore, autonomous vehicles may probe and know the position and vectors of all humans, thus avoiding collisions between autonomous vehicles and people.

In the drawings and specification, there have been disclosed embodiments of the invention and, although specific terms are employed, they are used in a generic and descriptive sense only and not for purposes of limitation, the scope of the invention being set forth in tire following claims.

## Claims

1. A method of detecting a. likelihood of collision of a device being a first smartphone (106), said method executed by the first smartphone (106) comprising:
establishing, via a criteria setting component (1002), a criterion to filter unlikely collisions as one of the group consisting of day of year, day of week, time of day, geographic location, temperature, precipitation, ambient brightness and combinations thereof;
establishing, via a threshold setting component (1006), a threshold associated with the criterion; determining, via a position determining component (1004), a position of the device at a first time;
determining, via a velocity determining component (1008), a velocity of the device at the first time;
receiving, via a vector information receiving component (1012), vector information describing the location and velocity associated with a communication device being a second smartphone (108);
determining, via a collision determining component (1014) likelihood of collision between the device and the communication device based on the established threshold, the received vector information, the determined position and the determined velocity; and
providing, via a signal component (1016), a signal associated with the likelihood of collision.

2. A method of detecting a likelihood of collision of a device being a first smartphone, said method executed by a system comprising a server, the first smartphone (106) and a second smartphone (108):
establishing, via a criteria setting component (1002) on the server, a criterion to filter unlikely collisions as one of the group consisting of day of year, day of week, time of day, geographic location, temperature, precipitation, ambient brightness and combinations thereof;
establishing, via a threshold setting component (1006) on the server, a threshold associated with the criterion;
determining, via a position determining component (1004) on the first smartphone, a position of the device at a first time;
determining, via a velocity determining component (1008) on the first smartphone, a velocity of the device at the first time;
receiving, via a transmitting component on the server, device vector information from the first smartphone based on the determined position and the determined velocity;
receiving, via a vector information receiving component (1012) on the server, second vector information describing the location and velocity associated with a communication device being a second smartphone;
determining, via a collision determining component (1014) likelihood of collision between the device and the communication device based on the established threshold, the received vector information, the determined position and the determined velocity; and
providing, via a signal component (1016) , a signal associated with the likelihood of collision.

3. A method of claim 1 or 2,
wherein said establishing the criterion to filter unlikely collisions as comprises establishing file criterion to filter unlikely collisions as the time of day,
wherein said establishing, via a threshold setting component, a threshold associated with the criterion comprises establishing a time of day threshold, tₜₕₜ, associated with the time of day criterion such that tₛₛ < tₜₕₜ < tₛᵣ,
wherein tₛₛ is the time of the most recent sunset, of the geographic location associated with the position, and
wherein tₛᵣ is the time of sunrise, after tₛₛ of the geographic location associated with the position.

4. A method of claim 3, further comprising;
establishing, via the criteria setting component, a second criterion to filter unlikely collisions as temperature of the geographic location associated with the position; and
establishing, via the threshold setting component, a temperature threshold, tₜₕₜₑₘₚ associated with the temperature criterion such that tₜₕₜₑₘₚ < 32° F.

5. A method of claim 1 or 2,
wherein said establishing the criterion to filter unlikely collisions as comprises establishing the criterion to filter unlikely collisions temperature of the geographic location associated with the position, and wherein said establishing, via a threshold setting component; a threshold associated with the criterion comprises establishing a temperature threshold tₜₕₜₑₘₚ, associated with the temperature criterion such that tₜₕₜₑₘₚ < 32° F.

## Patentansprüche

1. Verfahren zum Detektieren einer Wahrscheinlichkeit einer Kollision einer Vorrichtung, bei der es sich um ein erstes Smartphone (106) handelt, wobei das Verfahren, das vom ersten Smartphone (106) ausgeführt wird, Folgendes umfasst:
Festlegen eines Kriteriums via einer Kriteriumseinstellungskomponente (1002), um unwahrscheinliche Kollisionen als eines der Gruppe zu filtern, die aus einem Tag des Jahres, einem Wochentag, einer Tageszeit, einem geografischen Standort, Temperatur, Niederschlag, Umgebungshelligkeit und Kombinationen davon besteht;
Festlegen eines Schwellwerts, der mit dem Kriterium verknüpft ist, via einer Schwellwerteinstellungskomponente (1006);
Bestimmen einer Position der Vorrichtung bei einem ersten Mal via einer Positionsbestimmungskomponente (1004);
Bestimmen einer Geschwindigkeit der Vorrichtung beim ersten Mal via einer Geschwindigkeitsbestimmungskomponente (1008);
Empfangen von Vektorinformationen, die den Standort und die Geschwindigkeit beschreiben, die mit einer Kommunikationsvorrichtung verknüpft sind, bei der es sich um ein zweites Smartphone (108) handelt, via einer Vektorinformationsempfangskomponente (1012);
Bestimmen einer Wahrscheinlichkeit einer Kollision zwischen der Vorrichtung und der Kommunikationsvorrichtung auf Basis des festgelegten Schwellwerts, der empfangenen Vektorinformationen, der bestimmten Position und der bestimmten Geschwindigkeit via einer Kollisionsbestimmungskomponente (1014) und
Bereitstellen eines Signals, das mit der Wahrscheinlichkeit der Kollision verknüpft ist, via einer Signalkomponente (1016).

2. Verfahren zum Detektieren einer Wahrscheinlichkeit einer Kollision einer Vorrichtung, bei der es sich um ein erstes Smartphone handelt, wobei das Verfahren, das von einem System ausgeführt wird, das einen Server, das erste Smartphone (106) und das zweite Smartphone (108) umfasst:
Festlegen eines Kriteriums via einer Kriteriumseinstellungskomponente (1002) auf dem Server, um unwahrscheinliche Kollisionen als eines der Gruppe zu filtern, die aus einem Tag des Jahres, einem Wochentag, einer Tageszeit, einem geografischen Standort, Temperatur, Niederschlag, Umgebungshelligkeit und Kombinationen davon besteht;
Festlegen eines Schwellwerts, der mit dem Kriterium verknüpft ist, via einer Schwellwerteinstellungskomponente (1006) auf dem Server; Bestimmen einer Position der Vorrichtung bei einem ersten Mal via einer Positionsbestimmungskomponente (1004) auf dem ersten Smartphone;
Bestimmen einer Geschwindigkeit der Vorrichtung beim ersten Mal via einer Geschwindigkeitsbestimmungskomponente (1008) auf dem ersten Smartphone;
Empfangen von Vorrichtungsvektorinformationen via einer Übertragungskomponente auf dem Server vom ersten Smartphone auf Basis der bestimmten Position und der bestimmten Geschwindigkeit;
Empfangen von zweiten Vektorinformationen, die den Standort und die Geschwindigkeit beschreiben, die mit einer Kommunikationsvorrichtung verknüpft sind, bei der es sich um ein zweites Smartphone handelt, via einer Vektorinformationsempfangskomponente (1012) auf dem Server;
Bestimmen einer Wahrscheinlichkeit einer Kollision zwischen der Vorrichtung und der Kommunikationsvorrichtung auf Basis des festgelegten Schwellwerts, der empfangenen Vektorinformationen, der bestimmten Position und der bestimmten Geschwindigkeit via einer Kollisionsbestimmungskomponente (1014) und
Bereitstellen eines Signals, das mit der Wahrscheinlichkeit der Kollision verknüpft ist, via einer Signalkomponente (1016).

3. Verfahren nach Anspruch 1 oder 2,
wobei das Festlegen des Kriteriums zum Filtern unwahrscheinlicher Kollisionen das Festlegen eines Dateikriteriums zum Filtern unwahrscheinlicher Kollisionen als die Tageszeit umfasst,
wobei das Festlegen eines Schwellwerts, der mit dem Kriterium verknüpft ist, via der Schwellwerteinstellungskomponente das Festlegen eines Tageszeitschwellwerts, tₜₕₜ, der mit dem Tageszeitkriterium verknüpft ist, umfasst, derart, dass tₛₛ < tₜₕₜ < tₛᵣ,
wobei tₛₛ die Zeit des letzten Sonnenuntergangs am geografischen Standort ist, der mit der Position verknüpft ist, und
wobei tₛᵣ die Zeit des letzten Sonnenaufgangs nach tₛₛ am geografischen Standort ist, der mit der Position verknüpft ist.

4. Verfahren nach Anspruch 3, das ferner Folgendes umfasst;
Festlegen eines zweiten Kriteriums via der Kriteriumseinstellungskomponente, um unwahrscheinliche Kollisionen als Temperatur des geografischen Standorts, der mit der Position verknüpft ist, zu filtern; und
Festlegen eines Temperaturschwellwerts, tₜₕₜₑₘₚ, der mit dem Temperaturkriterium verknüpft ist, via der Schwellwerteinstellungskomponente, derart, dass tₜₕₜₑₘₚ < 32°F.

5. Verfahren nach Anspruch 1 oder 2,
wobei das Festlegen des Kriteriums zum Filtern unwahrscheinliche Kollisionen das Festlegen des Kriteriums, um unwahrscheinliche Kollisionen zu filtern als Temperatur des geografischen Standorts, der mit der Position verknüpft ist, umfasst und wobei das Festlegen eines Schwellwerts, der mit dem Kriterium verknüpft ist, via der Schwellwerteinstellungskomponente das Festlegen eines Temperaturschwellwerts, tₜₕₜₑₘₚ, der mit dem Temperaturkriterium verknüpft ist, umfasst, derart, dass tₜₕₜₑₘₚ < 32°F.

## Revendications

1. Procédé de détection d'une probabilité de collision d'un dispositif qui est un premier smartphone (106), ledit procédé, exécuté par le premier smartphone (106), comprenant les étapes consistant à :
établir, par l'intermédiaire d'un composant de définition de critères (1002), un critère de filtrage de collisions improbables en fonction d'un élément du groupe constitué du jour de l'année, du jour de la semaine, de l'heure de la journée, de la localisation géographique, de la température, des précipitations, de la luminosité ambiante et de combinaisons correspondantes ;
établir, par l'intermédiaire d'un composant de définition de seuil (1006), un seuil associé au critère ;
déterminer, par l'intermédiaire d'un composant de détermination de position (1004), une position du dispositif à un premier moment ;
déterminer, par l'intermédiaire d'un composant de détermination de vitesse (1008), une vitesse du dispositif au premier moment ;
recevoir, par l'intermédiaire d'un composant de réception d'informations vectorielles (1012), des informations vectorielles décrivant la localisation et la vitesse associées à un dispositif de communication qui est un second smartphone (108) ;
déterminer, par l'intermédiaire d'un composant de détermination de collision (1014), une probabilité de collision entre le dispositif et le dispositif de communication sur la base du seuil établi, des informations vectorielles reçues, de la position déterminée et de la vitesse déterminée ; et
fournir, par l'intermédiaire d'un composant de signal (1016), un signal associé à la probabilité de collision.

2. Procédé de détection d'une probabilité de collision d'un dispositif qui est un premier smartphone, ledit procédé, exécuté par un système comprenant un serveur, le premier smartphone (106) et un second smartphone (108), comprenant les étapes consistant à :
établir, par l'intermédiaire d'un composant de définition de critères (1002) sur le serveur, un critère de filtrage de collisions improbables en fonction d'un élément du groupe constitué du jour de l'année, du jour de la semaine, de l'heure de la journée, de la localisation géographique, de la température, des précipitations, de la luminosité ambiante et de combinaisons correspondantes ;
établir, par l'intermédiaire d'un composant de définition de seuil (1006) sur le serveur, un seuil associé au critère ;
déterminer, par l'intermédiaire d'un composant de détermination de position (1004) sur le premier smartphone, une position du dispositif à un premier moment ;
déterminer, par l'intermédiaire d'un composant de détermination de vitesse (1008) sur le premier smartphone, une vitesse du dispositif au premier moment ;
recevoir, par l'intermédiaire d'un composant d'émission sur le serveur, des informations vectorielles de dispositif en provenance du premier smartphone sur la base de la position déterminée et de la vitesse déterminée ;
recevoir, par l'intermédiaire d'un composant de réception d'informations vectorielles (1012) sur le serveur, des secondes informations vectorielles décrivant la localisation et la vitesse associées à un dispositif de communication qui est un second smartphone ;
déterminer, par l'intermédiaire d'un composant de détermination de collision (1014), une probabilité de collision entre le dispositif et le dispositif de communication sur la base du seuil établi, des informations vectorielles reçues, de la position déterminée et de la vitesse déterminée ; et
fournir, par l'intermédiaire d'un composant de signal (1016), un signal associé à la probabilité de collision.

3. Procédé selon la revendication 1 ou 2,
dans lequel ledit établissement du critère de filtrage de collisions improbables comprend l'étape consistant à établir un critère de fichier pour le filtrage de collisions improbables en fonction de l'heure de la journée,
dans lequel ledit établissement, par l'intermédiaire d'un composant de réglage de seuil, d'un seuil associé au critère comprend l'étape consistant à établir un seuil d'heure de la journée tₜₕₜ associé au critère d'heure de la journée, de telle sorte que tₛₛ < tₜₕₜ < tₛᵣ,
dans lequel tₛₛ est l'heure du coucher de soleil le plus récent, de la localisation géographique associée à la position, et
dans lequel tₛᵣ est l'heure du lever du soleil, après tₛₛ, de la localisation géographique associée à la position.

4. Procédé selon la revendication 3, comprenant en outre les étapes consistant à :
établir, par l'intermédiaire du composant de définition de critères, un second critère de filtrage de collisions improbables en fonction de la température de la localisation géographique associée à la position ; et
établir, par l'intermédiaire du composant de définition de seuil, un seuil de température tₜₕₜₑₘₚ associé au critère de température, de telle sorte que tₜₕₜₑₘₚ < 32° F.

5. Procédé selon la revendication 1 ou 2,
dans lequel ledit établissement du critère de filtrage de collisions improbables comprend l'étape consistant à :
établir le critère de filtrage de collisions improbables en fonction de la température de la localisation géographique associée à la position, et
dans lequel ledit établissement, par l'intermédiaire d'un composant de définition de seuil, d'un seuil associé au critère comprend l'étape consistant à :
établir un seuil de température tₜₕₜₑₘₚ associé au critère de température, de telle sorte que tₜₕₜₑₘₚ < 32° F.
